# EUROPEAN PATENT APPLICATION

(11) **EP 4 303 182 A1**
(43) Date of publication of application: **10.01.2024**
(21) Application number: 21929206.7
(22) Date of filing: 10.12.2021
(51) Int. Cl.: C01B 25/37, C08K 3/32

(54) **POWDER, FILLER, COMPOSITION, AND FILLER PRODUCTION METHOD**

(30) Priority: 04.03.2021 JP 2021034502
(71) Applicant: Fujimi Incorporated, Kiyosu-shi, Aichi 452-8502 (JP)
(72) Inventor: IWAKUNI Mayumi, Kiyosu-shi, Aichi 452-8502 (JP); ASHITAKA Keiji, Kiyosu-shi, Aichi 452-8502 (JP); MIWA Naoya, Kiyosu-shi, Aichi 452-8502 (JP)
(74) Representative: Maiwald GmbH
(86) International application number: PCT/JP2021/045581
(87) International publication number: WO 2022/185648

(57) **Abstract**

Provided is a powder having a high transmittance that is suitable as a filler for optical materials and resins for which transparency is demanded. The powder of the present invention includes crystalline plate-shaped titanium phosphate particles, in which a ratio of particles having a particle diameter of 0.52 um or more to 0.87 um or less is 7.0% by mass or less.

## Description

### Technical Field

The present invention relates to a powder, a filler, a composition, and a method for producing a filler.

### Background Art

There is a demand for powders having a high transmittance as fillers for optical materials and resins for which transparency is demanded.

PTL 1 discloses, as inorganic particles useful for blending in light scattering bodies (sheets), inorganic oxide particles formed of a core part, in which silica is the main component, and a coating layer of a silica-based composite oxide, in which silica and an oxide of a metal of group 4 or group 14 of the periodic table other than silicon are the main components. For these inorganic oxide particles, the average particle diameter is 1.1 um to 10 um and the degree of circularity determined from electron microscope images is 0.8 or more. In addition, the coating layer has a thickness of 0.03 um or more and contains oxides of metals of group 4 or group 14 of the periodic table other than silicon in a range of 22 mol% to 70 mol%.

With the object of providing a light extracting resin composition capable of sufficiently increasing the light extraction efficiency in a light-emitting device, in particular, a light extracting resin composition capable of adhering to a transparent substrate of a light-emitting device with high adhesive strength and forming a light extracting layer capable of extracting light with high efficiency, PTL 2 discloses the use of a filler having an average particle diameter of 0.5 um to 50 um formed of at least one type selected from titanium oxide, aluminium oxide, zirconium oxide, cerium oxide, and barium titanate.

With the object of providing a film including interlayer compound particles having excellent adhesion at an interface with a matrix polymer, PTL 3 discloses a film formed of a layered substance and an organic material and containing 0.1% by mass or more to 15% by mass or less of the organic material between layers of the layered substance and containing 0.01% by mass or more to 80% by mass or less of interlayer compound particles having an average particle diameter of 5 um or less in which the ratio of coarse particles which are 10 um or more is 10% by mass or less. An interlayer compound is a compound in which an organic material is present between the layers of a layered substance.

In addition, PTL 3 indicates that examples of methods for obtaining a layered compound with a fine particle diameter include the usual milling methods and methods using sizing methods, that fine particles are easily obtained with an interlayer compound of a composite obtained by synthesis, and that the particle shape of interlayer compound particles may be any of spherical, plate-shaped, irregular, or the like, but shapes that are as close to a spherical shape as possible are preferable.

### Citation List

### Patent Literatures

PTL 1: JP 4841880 B
PTL 2: JP 6269669 B
PTL 3: JP 3250219 B

### Summary of Invention

### Technical Problem

The object of the present invention is to provide a powder having a high transmittance suitable as a filler for optical materials and resins for which transparency is demanded.

### Solution to Problem

In order to solve the above problem, a first aspect of the present invention provides a powder including crystalline plate-shaped titanium phosphate particles, in which a ratio of particles having a particle diameter of 0.52 um or more to 0.87 um or less is 7.0% by mass or less.

A second aspect of the present invention provides a method for producing a filler formed of a powder of crystalline plate-shaped titanium phosphate particles, the method including a step of confirming that a ratio of particles having a particle diameter of 0.52 um or more to 0.87 um or less in the powder is 7.0% by mass or less.

### Advantageous Effects of Invention

According to the present invention, it is possible to provide a powder having a high transmittance that is suitable as a filler for optical materials and resins for which transparency is demanded.

### Brief Description of Drawings

FIG. 1 is a graph illustrating the relationship between the total light transmittance and the cumulative 50% primary particle diameter on a volume basis for synthesized products A to F; and
FIG. 2 is a graph illustrating the relationship between the total light transmittance and the ratio of particles having a particle diameter of 0.52 um or more to 0.87 um or less for samples Nos. 1 to 9.

### Description of Embodiments

A description will be given below of embodiments of the present invention, but the present invention is not limited to the embodiments shown below. Although the embodiments shown below include technologically preferable limitations for carrying out the present invention, these limitations are not essential requirements of the present invention.

The filler of this embodiment is a powder formed of crystalline plate-shaped titanium phosphate particles, the powder having a ratio of particles having a particle diameter of 0.52 um or more to 0.87 um or less of 7.0% by mass or less. The aspect ratio of the crystalline plate-shaped titanium phosphate particles is 5 or more.

It is possible to use an image analysis method to calculate the cumulative 50% primary particle diameter on a volume basis (volume D50% diameter) by measuring the longest diagonal line of the plate face of the plate-shaped crystals as the primary particle diameter. In addition, it is possible to use an image analysis method to calculate the cumulative 50% thickness on a volume basis (volume D50% thickness) by measuring the thickness of the side surfaces of the plate-shaped crystals. The aspect ratio is a value obtained by dividing the volume D50% diameter by the volume D50% thickness.

It is possible to obtain the filler, for example, by the following method.

First, a titanyl sulfate solution and a phosphoric acid solution are mixed in a ratio [P] / [Ti] in which the molar concentration of phosphorus [P] to the molar concentration of titanium [Ti] is 5 or more to 21 or less to obtain a mixed solution. Next, the mixed solution is placed in a sealed container, the temperature is held at a value in a range of 100°C or higher and 160°C or lower and a reaction is carried out for a predetermined period of time (for example, 5 hours or more). In other words, hydrothermal synthesis is carried out. The pressure in the sealed container is atmospheric pressure or greater, which is naturally determined by the pressurization temperature. Due to this, a slurry including crystalline particles of titanium phosphate is obtained.

Next, the obtained slurry is cooled and then a solid portion (crystalline particles of titanium phosphate) is separated from the slurry. The obtained solid portion is cleaned with a cleaning solution formed of water or ammonia water (ammonium hydroxide) and then dried. Due to this, a crystalline plate-shaped titanium phosphate powder is obtained.

Next, the particle size distribution of the obtained crystalline plate-shaped titanium phosphate powder is measured and, when the ratio of particles having a particle diameter of 0.52 um or more to 0.87 um or less is 7.0% by mass or less, the powder is expected to have high total light transmittance and is thus used as a filler as it is.

In a case where the particle size distribution of the obtained crystalline plate-shaped titanium phosphate powder is such that the ratio of particles having a particle diameter of 0.52 um or more to 0.87 um or less exceeds 7.0% by mass, a crystalline plate-shaped titanium phosphate powder with a different particle size distribution is mixed in such that the ratio of particles having a particle diameter of 0.52 um or more to 0.87 um or less becomes 7.0% by mass or less. The crystalline plate-shaped titanium phosphate powder in which the ratio of particles having a particle diameter of 0.52 um or more to 0.87 um or less is 7.0% by mass or less is used as a filler.

In other words, the method for producing a filler of this embodiment is a method for producing a filler formed of a powder of crystalline plate-shaped titanium phosphate particles including a step of confirming that a ratio of particles having a particle diameter of 0.52 um or more to 0.87 um or less in the powder is 7.0% by mass or less. Therefore, it is possible to produce a filler having a high total light transmittance.

### Examples

### [Synthesis of Titanium Phosphate]

Six types (A to F) of titanium phosphate were synthesized by the following method.

### <Synthesized Product A>

First, a titanyl sulfate solution and a phosphoric acid solution were mixed at a ratio [P] / [Ti] in which the molar concentration of phosphorus [P] to the molar concentration of titanium [Ti] was 9.0 to obtain a mixed solution. Next, the mixed solution was placed in a 1.4 L autoclave and the temperature was held at 110°C for 5 hours to carry out a reaction.

After the reaction, the lid was opened to cool the slurry inside the container to room temperature, which was then extracted from inside the container and the solid portion was separated from the slurry by filtration. The solid portion was cleaned with water and then dried (left to stand at a temperature of 105°C for 24 hours) to obtain a powder.

As a result of analyzing the obtained powder using an X-ray diffraction apparatus, it was confirmed that the particles forming the powder were crystalline titanium phosphate having the structural formula Ti(HPO₄)₂ · H₂O.

Upon observing the obtained powder using a scanning electron microscope, it was confirmed that the shape of the particles forming the powder was plate-shaped and that many particles having a hexagonal plate shape were included.

When the volume D50% diameter, CV value (standard deviation / number average primary particle diameter), and the volume D50% thickness of the crystalline particles forming the obtained powder were measured by analyzing the scanning electron microscope images using image analysis software "Mac-View ver. 4" manufactured by Mountech Co., Ltd., the volume D50% diameter was 0.29 um, the CV value was 0.45, and the volume D50% thickness was 0.030 um.

In addition, according to calculation (0.29 / 0.030) using the measured values of the volume D50% thickness and the volume D50% diameter, the aspect ratio of the crystalline particles forming the obtained powder was 10.

Furthermore, when the ratio of particles having a particle diameter in a range of 0.52 um or more to 0.87 um or less was investigated using the same analysis software, the result was 5.82% by mass.

In addition, when the total light transmittance was measured by the following method, the result was 89.5%.

First, the powder was dispersed in a product in which cyclopentasiloxane was dissolved in an (acrylates / dimethicone) copolymer (KP-545 manufactured by Shin-Etsu Chemical Co., Ltd.) to produce a slurry of 10% by mass, this slurry was coated on a glass slide having a thickness of 1 mm to form a coating film having a thickness of 25 um, which was dried to obtain a test sample. The obtained test samples were placed in a haze-gard i haze meter manufactured by Byk Japan KK to measure the total light transmittance in a C light source in accordance with the ASTM standard "D 1003".

### <Synthesized Product B>

First, a titanyl sulfate solution and a phosphoric acid solution were mixed at a ratio [P] / [Ti] in which the molar concentration of phosphorus [P] to the molar concentration of titanium [Ti] was 10.7 to obtain a mixed solution. Next, the mixed solution was placed in a 1.4 L autoclave and the temperature was held at 110°C for 5 hours to carry out a reaction.

After the reaction, the lid was opened to cool the slurry inside the container to room temperature, which was then extracted from inside the container and the solid portion was separated from the slurry by filtration. The solid portion was cleaned with water and then dried (left to stand at a temperature of 105°C for 24 hours) to obtain a powder.

As a result of analyzing the obtained powder using an X-ray diffraction apparatus, it was confirmed that the particles forming the powder were crystalline titanium phosphate having the structural formula Ti(HPO₄)₂ · H₂O.

Upon observing the obtained powder using a scanning electron microscope, it was confirmed that the shape of the particles forming the powder was plate-shaped and that many particles having a hexagonal plate shape were included. In addition, when the volume D50% diameter, CV value (standard deviation / number average primary particle diameter), and the volume D50% thickness of the crystalline particles forming the obtained powder were measured using the same method as for the synthesized product A, the volume D50% diameter was 0.53 um, the CV value was 0.34, and the volume D50% thickness was 0.065 um.

In addition, according to calculation (0.53 / 0.065) using the measured values of the volume D50% thickness and the volume D50% diameter, the aspect ratio of the crystalline particles forming the obtained powder was 8.

Furthermore, when the ratio of particles having a particle diameter in a range of 0.52 um or more to 0.87 um or less was investigated using the same method as for the synthesized product A, the result was 72.64% by mass.

In addition, when the total light transmittance was measured using the same method as for the synthesized product A, the result was 85.1%.

### <Synthesized Product C>

First, a titanyl sulfate solution and a phosphoric acid solution were mixed at a ratio [P] / [Ti] in which the molar concentration of phosphorus [P] to the molar concentration of titanium [Ti] was 10.4 to obtain a mixed solution. Next, the mixed solution was placed in a 1.4 L autoclave and the temperature was held at 110°C for 5 hours to carry out a reaction.

After the reaction, the lid was opened to cool the slurry inside the container to room temperature, which was then extracted from inside the container and the solid portion was separated from the slurry by filtration. The solid portion was cleaned with water and then dried (left to stand at a temperature of 105°C for 24 hours) to obtain a powder.

As a result of analyzing the obtained powder using an X-ray diffraction apparatus, it was confirmed that the particles forming the powder were crystalline titanium phosphate having the structural formula Ti(HPO₄)₂ · H₂O.

Upon observing the obtained powder using a scanning electron microscope, it was confirmed that the shape of the particles forming the powder was plate-shaped and that many particles having a hexagonal plate shape were included. In addition, when the volume D50% diameter, CV value (standard deviation / number average primary particle diameter), and the volume D50% thickness of the crystalline particles forming the obtained powder were measured using the same method as for the synthesized product A, the volume D50% diameter was 0.74 um, the CV value was 0.42, and the volume D50% thickness was 0.090 um.

In addition, according to calculation (0.74 / 0.090) using the measured values of the volume D50% thickness and the volume D50% diameter, the aspect ratio of the crystalline particles forming the obtained powder was 8.

Furthermore, when the ratio of particles having a particle diameter in a range of 0.52 um or more to 0.87 um or less was investigated using the same method as for the synthesized product A, the result was 67.10% by mass.

In addition, when the total light transmittance was measured using the same method as for the synthesized product A, the result was 85.4%.

### <Synthesized Product D>

First, a titanyl sulfate solution and a phosphoric acid solution were mixed at a ratio [P] / [Ti] in which the molar concentration of phosphorus [P] to the molar concentration of titanium [Ti] was 10.2 to obtain a mixed solution. Next, the mixed solution was placed in a 200 L autoclave and the temperature was held at 110°C for 5 hours to carry out a reaction.

After the reaction, the lid was opened to cool the slurry inside the container to room temperature, which was then extracted from inside the container, and the solid portion was separated from the slurry by filtration. The solid portion was cleaned with 29% ammonia water (aqueous solution of ammonium salts) and then dried (left to stand at a temperature of 105°C for 24 hours) to obtain a powder.

As a result of analyzing the obtained powder using an X-ray diffraction apparatus, it was confirmed that the particles forming the powder were crystalline titanium phosphate having the structural formula Ti(HPO₄)₂ · H₂O.

Upon observing the obtained powder using a scanning electron microscope, it was confirmed that the shape of the particles forming the powder was plate-shaped and that many particles having a hexagonal plate shape were included. In addition, when the volume D50% diameter, CV value (standard deviation / number average primary particle diameter), and the volume D50% thickness of the crystalline particles forming the obtained powder were measured using the same method as for the synthesized product A, the volume D50% diameter was 1.11 um, the CV value was 0.33, and the volume D50% thickness was 0.143 um.

In addition, according to calculation (1.11 / 0.143) using the measured values of the volume D50% thickness and the volume D50% diameter, the aspect ratio of the crystalline particles forming the obtained powder was 8.

Furthermore, when the ratio of particles having a particle diameter in a range of 0.52 um or more to 0.87 um or less was investigated using the same method as for the synthesized product A, the result was 16.97% by mass.

In addition, when the total light transmittance was measured using the same method as for the synthesized product A, the result was 87.1%.

### <Synthesized Product E>

First, a titanyl sulfate solution and a phosphoric acid solution were mixed at a ratio [P] / [Ti] in which the molar concentration of phosphorus [P] to the molar concentration of titanium [Ti] was 6.9 to obtain a mixed solution. Next, the mixed solution was placed in a 1.4 L autoclave and the temperature was held at 120°C for 5 hours to carry out a reaction.

After the reaction, the lid was opened to cool the slurry inside the container to room temperature, which was then extracted from inside the container and the solid portion was separated from the slurry by filtration. The solid portion was cleaned with water and then dried (left to stand at a temperature of 105°C for 24 hours) to obtain a powder.

As a result of analyzing the obtained powder using an X-ray diffraction apparatus, it was confirmed that the particles forming the powder were crystalline titanium phosphate having the structural formula Ti(HPO₄)₂ · H₂O.

Upon observing the obtained powder using a scanning electron microscope, it was confirmed that the shape of the particles forming the powder was plate-shaped and that many particles having a hexagonal plate shape were included. In addition, when the volume D50% diameter, CV value (standard deviation / number average primary particle diameter), and the volume D50% thickness of the crystalline particles forming the obtained powder were measured using the same method as for the synthesized product A, the volume D50% diameter was 2.07 um, the CV value was 0.37, and the volume D50% thickness was 0.302 um.

In addition, according to calculation (2.07 / 0.302) using the measured values of the volume D50% thickness and the volume D50% diameter, the aspect ratio of the crystalline particles forming the obtained powder was 7.

Furthermore, when the ratio of particles having a particle diameter in a range of 0.52 um or more to 0.87 um or less was investigated using the same method as for the synthesized product A, the result was 1.05% by mass.

In addition, when the total light transmittance was measured using the same method as for the synthesized product A, the result was 90.3%.

### <Synthesized Product F>

First, a titanyl sulfate solution and a phosphoric acid solution were mixed at a ratio [P] / [Ti] in which the molar concentration of phosphorus [P] to the molar concentration of titanium [Ti] was 10.8 to obtain a mixed solution. Next, the mixed solution was placed in a 200 L autoclave and the temperature was held at 130°C for 5 hours to carry out a reaction.

After the reaction, the lid was opened to cool the slurry inside the container to room temperature, which was then extracted from inside the container and the solid portion was separated from the slurry by filtration. The solid portion was cleaned with water and then dried (left to stand at a temperature of 105°C for 24 hours) to obtain a powder.

As a result of analyzing the obtained powder using an X-ray diffraction apparatus, it was confirmed that the particles forming the powder were crystalline titanium phosphate having the structural formula Ti(HPO₄)₂ · H₂O.

Upon observing the obtained powder using a scanning electron microscope, it was confirmed that the shape of the particles forming the powder was plate-shaped and that many particles having a hexagonal plate shape were included. In addition, when the volume D50% diameter, CV value (standard deviation / number average primary particle diameter), and the volume D50% thickness of the crystalline particles forming the obtained powder were measured using the same method as for the synthesized product A, the volume D50% diameter was 7.44 um, the CV value was 0.36, and the volume D50% thickness was 0.856 um.

In addition, according to calculation (7.44 / 0.856) using the measured values of the volume D50% thickness and the volume D50% diameter, the aspect ratio of the crystalline particles forming the obtained powder was 9.

Furthermore, when the ratio of particles having a particle diameter in a range of 0.52 um or more to 0.87 um or less was investigated using the same method as for the synthesized product A, the result was 0.00% by mass.

In addition, when the total light transmittance was measured using the same method as for the synthesized product A, the result was 91.4%.

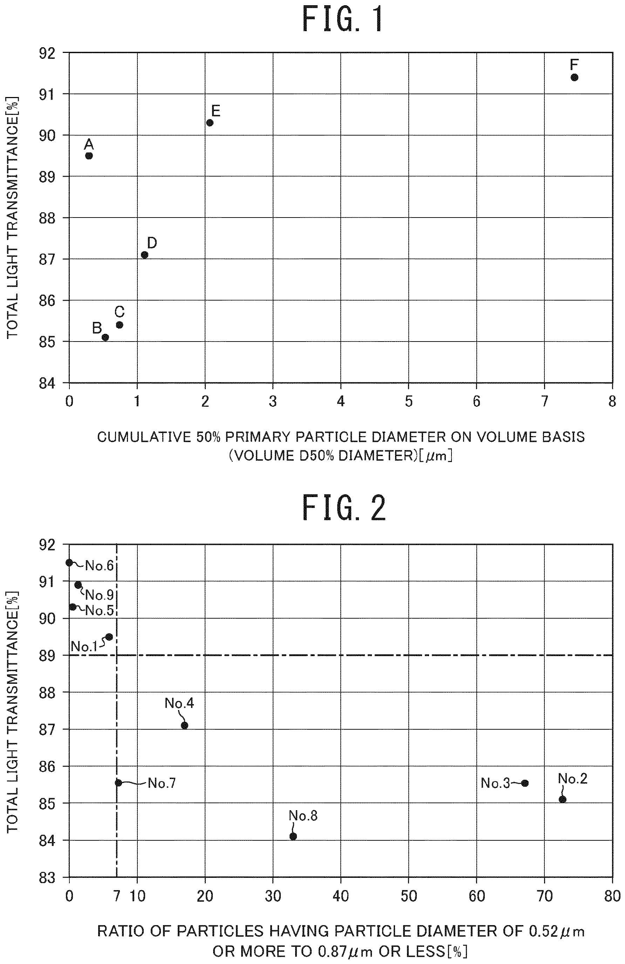

FIG. 1 uses a graph to illustrate the relationship between the total light transmittance and the cumulative 50% primary particle diameter on a volume basis (volume D50% diameter) of the synthesized titanium phosphate powders A to F. From the graph in FIG. 1, it is understood that the total light transmittance reaches minimum values at volume D50% diameters of close to 0.53 um and 0.74 um.

### [Preparation of Powder]

The synthesized titanium phosphate powders A to F were mixed in the ratios shown in Table 1 to obtain titanium phosphate powders No. 1 to No. 9. The titanium phosphate powders No. 1 to No. 6 are the same as the titanium phosphate powders of synthesized products A to D, respectively. Since the titanium phosphate powders No. 7 to No. 9 were mixed products, the volume D50% diameter, CV value, and volume D50% thickness were measured using the method described above and the aspect ratio was calculated. Furthermore, the ratio of particles having a particle diameter in a range of 0.52 um or more to 0.87 um or less was investigated using the same method as for the synthesized product A, and the total light transmittance was measured using the same method as for synthesized product A.

Table 1 shows the composition of each powder, the ratio of particles having a particle diameter in a range of 0.52 um or more to 0.87 um or less, the volume D50% diameter, the CV value, the volume D50% thickness, the aspect ratio, and the total light transmittance. In addition, FIG. 2 uses a graph to illustrate the relationship between the total light transmittance and the ratio of particles having a particle diameter of 0.52 um or more to 0.87 um or less for samples Nos. 1 to 9.

**[Table 1]**

| | A | B | C | D | E | F | Characteristics | | | | | |
|---|---|---|---|---|---|---|---|---|---|---|---|---|
| Volume D50% diameter [µm] | 0.29 | 0.53 | 0.74 | 1.11 | 2.07 | 7.44 | Ratio of particles which are 0.52 µm to 0.87 µm [% by mass] | CV value | Volume D50% diameter [µm] | Volume D50% thickness [µm] | Aspect ratio | Total light transmittance [%] |
| Volume D50% thickness [µm] | 0.030 | 0.065 | 0.090 | 0.143 | 0.302 | 0.856 | | | | | | |
| No. 1 | 100 | 0 | 0 | 0 | 0 | 0 | 5.82 | 0.45 | 0.29 | 0.030 | 10 | 89.5 |
| No. 2 | 0 | 100 | 0 | 0 | 0 | 0 | 72.64 | 0.34 | 0.53 | 0.065 | 8 | 85.1 |
| No. 3 | 0 | 0 | 100 | 0 | 0 | 0 | 67.10 | 0.42 | 0.74 | 0.090 | 8 | 85.4 |
| No. 4 | 0 | 0 | 0 | 100 | 0 | 0 | 16.97 | 0.33 | 1.11 | 0.143 | 8 | 87.1 |
| No. 5 | 0 | 0 | 0 | 0 | 100 | 0 | 1.05 | 0.37 | 2.07 | 0.302 | 7 | 90.3 |
| No. 6 | 0 | 0 | 0 | 0 | 0 | 100 | 0.00 | 0.36 | 7.44 | 0.856 | 9 | 91.4 |
| No. 7 | 0 | 10 | 5 | 15 | 70 | 0 | 7.22 | 0.82 | 1.89 | 0.263 | 7 | 85.5 |
| No. 8 | 5 | 18 | 0 | 77 | 0 | 0 | 32.98 | 0.44 | 0.97 | 0.123 | 8 | 84.1 |
| No. 9 | 4 | 0 | 0 | 35 | 0 | 61 | 2.13 | 1.05 | 6.23 | 0.768 | 8 | 90.9 |

From these results, the following is understood.

The total light transmittance of powders No. 1, No. 5, No. 6, and No. 9, which were formed of crystalline plate-shaped titanium phosphate particles and for which the content of particles having a particle diameter in a range of 0.52 um or more to 0.87 um or less was 5.82 mass% or less, was as high as 89.5% or more to 91.4% or less, while the total light transmittance of powders No. 2 to No. 4, No. 7, and No. 8, for which the content of particles having a particle diameter in a range of 0.52 um or more to 0.87 um or less was 7.22 mass% or more, was as low as 84.1% or more to 87.1% or less.

Thus, it may be said that powders for which the content of particles having a particle diameter in a range of 0.52 um or more to 0.87 um or less was 5.82% by mass or less (7.0% by mass or less) are suitable as a filler for optical materials and resins for which transparency is demanded.

In addition, by including a step of confirming that "in the powder formed of crystalline plate-shaped titanium phosphate particles, the content of particles having a particle diameter in a range of 0.52 um or more to 0.87 um or less is 7.0% by mass or less" in the method for producing a titanium phosphate powder for a filler, it is possible to produce a titanium phosphate powder for a filler which is suitable as a filler for optical materials and resins for which transparency is demanded.

## Claims

1. A powder comprising:
crystalline plate-shaped titanium phosphate particles, wherein a ratio of particles having a particle diameter of 0.52 um or more to 0.87 um or less is 7.0% by mass or less.

2. A filler comprising:
the powder according to claim 1.

3. A composition comprising:
the filler according to claim 2.

4. A method for producing a filler formed of a powder of crystalline plate-shaped titanium phosphate particles, the method comprising:
confirming that a ratio of particles having a particle diameter of 0.52 um or more to 0.87 um or less in the powder is 7.0% by mass or less.
